# EUROPÄISCHE PATENTSCHRIFT

(11) **EP 4 047 717 B1**
(45) Veröffentlichungstag und Bekanntmachung des Hinweises auf die Patenterteilung: **10.07.2024**
(21) Anmeldenummer: 22152994.4
(22) Anmeldetag: 24.01.2022
(51) Int. Cl.: H01M 10/613, H01M 10/647, H01M 10/654, H01M 10/6553, H01M 10/6554

(54) **BATTERIE**
BATTERY
BATTERIE

(30) Priorität: 17.02.2021 DE 102021201496
(43) Veröffentlichungstag der Anmeldung: 24.08.2022
(73) Patentinhaber: VOLKSWAGEN AG, 38440 Wolfsburg (DE)
(72) Erfinder: PAPE, Rudolf, 38118 Braunschweig (DE); SCHAAR, Bastian, 38116 Braunschweig (DE)
(74) Vertreter: FDST Patentanwälte

(56) Entgegenhaltungen:
- WO-A1-2013/042640
- DE-A1- 102013 016 790
- US-A- 5 871 861
- US-A1- 2014 242 426
- US-A1- 2017 324 125

## Beschreibung

Die Erfindung betrifft eine Batterie mit einem Zellstapel, der in einer Stapelrichtung übereinandergestapelten Lagen umfasst, wobei die Lagen abwechselnd aus einer Elektrode oder einem Separator gebildet sind. Die Erfindung betrifft ferner ein Batteriemodul mit mehreren Batterien.

In zunehmendem Maße werden Kraftfahrzeuge zumindest teilweise mittels eines Elektromotors angetrieben, sodass diese als Elektrofahrzeug oder Hybridfahrzeug ausgestaltet sind. Zur Bestromung des Elektromotors wird üblicherweise eine Hochvoltbatterie herangezogen, die mehrere einzelne Batteriemodule umfasst. Die Batteriemodule sind meist zueinander baugleich sowie miteinander elektrisch in Reihe und/oder parallel geschaltet, sodass die an der Hochvoltbatterie anliegende elektrische Spannung einem Vielfachen der mittels jedes der Batteriemodule bereitgestellten elektrischen Spannung entspricht. Jedes Batteriemodul wiederum umfasst mehrere Batterien, die meist in einem gemeinsamen Modulgehäuse angeordnet sind, und die miteinander elektrisch in Reihe und/oder parallel geschaltet sind.

Jede der Batterien wiederum umfasst üblicherweise mehrere Batteriezellen, die auch als galvanische Element bezeichnet werden. Diese weisen jeweils zwei Elektroden, nämlich eine Anode und eine Kathode, sowie einen dazwischen angeordneten Separator als auch einen Elektrolyten mit freibeweglichen Ladungsträgern auf. Als ein derartiger Elektrolyt wird beispielsweise eine Flüssigkeit herangezogen. In einer Alternative ist die Batterie als Festkörperbatterie ausgestaltet, und der Elektrolyt liegt als Festkörper vor. Die Anode und die Kathode, die die Elektroden der Batterie bilden, umfassen üblicherweise einen Träger, der als Stromableiter fungiert. An diesem ist üblicherweise ein Aktivmaterial befestigt, das ein Bestandteil einer auf den Träger, der auch als Ableiter bezeichnet wird, aufgebrachten Schicht ist. Hierbei ist es möglich, dass in der Schicht bereits der Elektrolyt vorhanden ist, oder dieser wird nachträglich eingebracht. Zumindest jedoch ist das Aktivmaterial zur Aufnahme der Arbeitsionen, z.B. Lithium-Ionen, geeignet. Je nach Verwendung als Anode oder Kathode wird ein anderes Material für den Träger und eine unterschiedliche Art des Materials der Schicht verwendet.

Zum Schutz der Batteriezellen sind diese üblicherweise in einem Gehäuse der Batterie angeordnet. Auch wird mittels des Gehäuses zudem der Elektrolyt vor Umwelteinflüssen geschützt.

Damit mittels der Batterie eine vergleichsweise große Kapazität bereitgestellt ist, sind üblicherweise mehrere derartige Batteriezellen, üblicherweise bis zu 100 Stück, in den gemeinsamen Gehäuse angeordnet. Um den vorhandenen Platz vergleichsweise effizient auszunutzen und eine Fertigung zu vereinfachen, sind die einzelnen Bestandteile der jeweiligen Batteriezellen flächig ausgestaltet und in einer Stapelrichtung übereinander gestapelt. Die einzelnen Batteriezellen wiederum sind in der Stapelrichtung übereinander gestapelt, sodass ein im Wesentlichen quaderförmiger Zellstapel gebildet ist. Alternativ sind auch gewickelte Ausführungen der Elektroden innerhalb der Batterie verbreitet.

Bei Betrieb der Batterie erfolgt ein Einspeisen oder eine Entnahme von elektrischer Energie aus den einzelnen Batteriezellen des Zellstapels. Aufgrund von entstehenden Verlusten erfolgt dabei eine Erwärmung des Zellstapels, die mit der eingespeisten/entnommenen Energiemenge zunimmt. Meist ist der Zellstapel an den gegenüberliegenden Stirnseiten thermisch mit dem Gehäuse kontaktiert, über das somit eine Entwärmung des Zellstapels erfolgen kann. Infolgedessen erfolgt jedoch eine vermehrte Entwärmung der den Stirnseiten zugeordneten Batteriezellen, wohingegen die sich in der Mitte des Zellstapels befindenden Batteriezellen vergleichsweise gering entwärmt werden. Somit bildet sich innerhalb des Zellstapels ein Temperaturgradient aus, der zu mechanischen Spannungen führen kann oder zumindest eine Effizienz der Batterie verringert. Weiterhin kann es zu einer inhomogenen Alterung innerhalb der Batterie kommen. Üblicherweise ist daher die Länge des Zellstapels in Stapelrichtung begrenzt, damit eine ausreichende Entwärmung der sich in der Mitte befindenden Batteriezellen erfolgt. Infolgedessen ist eine Kapazität der Batterie verringert, und es sind mehrere Batterien pro Batteriemodul erforderlich, um eine bestimmte Kapazität bereitzustellen. Da hierbei jede der Batterien das jeweilige Gehäuse aufweist, ist ein Gewicht des Batteriemoduls erhöht und eine Energiedichte verringert.

In US 2017/324125 A1 ist eine Pouchzelle beschrieben. Diese weist einen Zellstapel auf, der mehrere Elektroden umfasst. Jede zweite Elektrode steht einseitig über den Zellstapel über und liegt endseitig an einer Stromschiene mechanisch an. Die Stromschienen sind durch eine Öffnung eines Gehäuses geführt.

DE 10 2013 016790 A1 zeigt eine Batterieeinzelzelle in prismatischer Form. Mehrere Elektroden sind zu einem Elektrodenstapel aufgestapelt, und es sind zwei Stromableiter vorhanden, die jeweils einen flächigen Abschnitt aufweisen. Mit diesen ist jeweils eine der Elektroden auf ihrer senkrecht zur Stapelrichtung annähernden gesamten Fläche kontaktiert.

Aus WO 2013/042640 A1 ist eine Batterie in Form einer Rundzelle bekannt. Ein Stromkollektor verläuft mittig durch die Elektroden, der parallel zur Stapelrichtung der Elektroden angeordnet ist. Jede zweite Elektrode liegt an dem Stromkollektor mechanisch an.

Der Erfindung liegt die Aufgabe zugrunde, einen besonders geeignete Batterie und ein besonders geeignetes Batteriemodul anzugeben, wobei vorteilhafterweise eine Energiedichte erhöht und/oder ein Gewicht verringert ist.

Hinsichtlich der Batterie wird diese Aufgabe durch die Merkmale des Anspruchs 1 und hinsichtlich des Batteriemoduls durch die Merkmale des Anspruchs 8 erfindungsgemäß gelöst. Vorteilhafte Weiterbildungen und Ausgestaltungen sind Gegenstand der jeweiligen Unteransprüche.

Vorzugsweise ist die Batterie im bestimmungsgemäßen Zustand ein Bestandteil eines Kraftfahrzeugs. Hierfür ist die Batterie geeignet, insbesondere vorgesehen und eingerichtet. Im bestimmungsgemäßen Zustand ist die Batterie beispielsweise ein Bestandteil eines Energiespeichers des Kraftfahrzeugs, der mehrere derartige Batterien aufweist. Vorzugsweise sind hierbei die Batterien auf mehrere Batteriemodule aufgeteilt, die zueinander wiederum baugleich sind. Die Batterien sind insbesondere in einem Gehäuse des Energiespeichers bzw. des jeweiligen Batteriemoduls angeordnet und miteinander elektrisch parallel und/oder in Reihe geschaltet. Somit ist die an dem Energiespeicher/Batteriemodul anliegende elektrische Spannung ein Vielfaches der mittels jeder der Batterien bereitgestellten elektrischen Spannung. Zweckmäßigerweise sind sämtliche Batterien dabei zueinander baugleich, was eine Fertigung vereinfacht.

Das Gehäuse des Energiespeichers bzw. des jeweiligen Batteriemoduls ist bevorzugt aus einem Metall gefertigt, beispielsweise einem Stahl, wie einem Edelstahl, oder einer AluminiumLegierung. Zur Herstellung wird zum Beispiel ein Druckgussverfahren verwendet. Insbesondere ist das Gehäuse des Energiespeichers bzw. des jeweiligen Batteriemoduls verschlossen ausgestaltet. Zweckmäßigerweise ist in das Gehäuse des Energiespeichers bzw. des jeweiligen Batteriemoduls eine Schnittstelle eingebracht, die einen Anschluss des Energiespeichers/Batteriemoduls bildet. Die Schnittstelle ist dabei elektrisch mit den Batterien kontaktiert, sodass ein Einspeisen von elektrischer Energie und/oder eine Entnahme von elektrischer Energie aus den Batterien von außerhalb des Energiespeichers möglich ist, sofern an den Anschluss ein entsprechender Stecker gesteckt ist.

Das Kraftfahrzeug ist bevorzugt landgebunden und weist vorzugsweise eine Anzahl an Rädern auf, von denen zumindest eines, vorzugsweise mehrere oder alle, mittels eines Antriebs angetrieben sind. Geeigneterweise ist eines, vorzugsweise mehrere, der Räder steuerbar ausgestaltet. Somit ist es möglich, das Kraftfahrzeug unabhängig von einer bestimmten Fahrbahn, beispielsweise Schienen oder dergleichen, zu bewegen. Dabei ist es zweckmäßigerweise möglich, das Kraftfahrzeug im Wesentlichen beliebig auf einer Fahrbahn zu positionieren, die insbesondere aus einem Asphalt, einem Teer oder Beton gefertigt ist. Das Kraftfahrzeug ist beispielsweise ein Nutzkraftwagen, wie ein Lastkraftwagen (Lkw) oder ein Bus. Besonders bevorzugt jedoch ist das Kraftfahrzeug ein Personenkraftwagen (Pkw).

Mittels des Antriebs erfolgt zweckmäßigerweise eine Fortbewegung des Kraftfahrzeugs. Zum Beispiel ist der Antrieb, insbesondere der Hauptantrieb, zumindest teilweise elektrisch ausgestaltet, und das Kraftfahrzeug ist beispielsweise ein Elektrofahrzeug. Der Elektromotor wird zum Beispiel mittels des Energiespeichers betrieben, der geeigneterweise als eine Hochvoltbatterie ausgestaltet ist. Mittels der Hochvoltbatterie wird zweckmäßigerweise eine elektrische Gleichspannung bereitgestellt, wobei die elektrische Spannung zum Beispiel zwischen 200 V und 800 V und beispielsweise im Wesentlichen 400 V beträgt. Vorzugsweise ist zwischen dem Energiespeicher und dem Elektromotor ein elektrischer Umrichter angeordnet, mittels dessen die Bestromung des Elektromotors eingestellt wird. In einer Alternative weist der Antrieb zusätzlich einen Verbrennungsmotor auf, sodass das Kraftfahrzeug als Hybrid-Kraftfahrzeug ausgestaltet ist. In einer Alternative wird mittels des Energiespeichers ein Niedervoltbordnetz des Kraftfahrzeugs gespeist, und mittels des Energiespeichers wird insbesondere eine elektrische Gleichspannung von 12 V, 24 V oder 48 V bereitgestellt.

In einer weiteren Alternative ist die Batterie ein Bestandteil eines Flurförderfahrzeug, einer Industrieanlage, eines handgeführten Geräts, wie beispielsweise eines Werkzeugs, insbesondere eines Akkuschraubers. In einer weiteren Alternative ist die Batterie ein Bestandteil einer Energieversorgung und wird dort beispielsweise als sogenannte Pufferbatterie verwendet. In einer weiteren Alternative ist die Batterie ein Bestandteil eines tragbaren Geräts, beispielsweise eines tragbaren Mobiltelefons, oder eines sonstigen Wearables. Auch ist es möglich, eine derartige Batterie im Campingbereich, Modellbaubereich oder für sonstige Outdoor-Aktivitäten zu verwenden.

Die Batterie umfasst einen Zellstapel, der insbesondere auch als Elektrodenstapel bezeichnet wird. Der Zellstapel weist mehrere Lagen auf, die in einer Stapelrichtung übereinander gestapelt sind, und der somit zwei Enden aufweist, die sich in Stapelrichtung gegenüberliegen. Mit anderen Worten sind zwei Stirnseiten vorhanden. Die beiden Enden sind hierbei jeweils mittels einer der Lagen gebildet. Die Lagen sind zweckmäßigerweise flächig, insbesondere eben, ausgestaltet und zweckmäßigerweise senkrecht zu der Stapelrichtung angeordnet. Die Lagen sind zweckmäßigerweise rechteckförmig, sodass der Zellstapel im Wesentlichen quaderförmig ist. Auf diese Weise ist ein Einbringen in ein quaderförmiges Gehäuse ohne einen übermäßiger Platzbedarf ermöglicht, und es ist somit eine quaderförmige Batterie bereitstellbar. Auf diese Weise ist ein vergleichsweise effizientes Anordnen mit weiteren Batterien zu einem etwaigen Batteriemodul möglich. Insbesondere ist somit die Batterie als sogenannte prismatische Batterie ausgestaltet

Die Lagen sind aus Elektroden und Separatoren gebildet. Mit anderen Worten ist jede der Lagen entweder eine Elektrode oder ein Separator, sodass der Zellstapel mehrere Elektroden und mehrere Separatoren aufweist. Die Elektroden sind dabei jeweils entweder als eine Anode oder eine Kathode ausgestaltet. Die Elektroden und Separatoren sind in Stapelrichtung abwechselnd angeordnet, sodass zunächst einer der Separatoren, eine der Elektroden, wiederum einer der Separatoren und wiederum eine der Elektroden in Stapelrichtung angeordnet sind. Hierbei unterscheiden sich die beiden Elektroden, sodass zwischen jeweils zwei Anoden in Stapelrichtung eine der Kathoden angeordnet ist.

Die Separatoren sind beispielsweise in Stapelrichtung gleich, also insbesondere aus dem gleichen Material gefertigt. Alternativ hierzu unterscheidet sich das Material der einzelnen Separatoren, und es sind beispielsweise zwei unterschiedliche Arten von Separatoren vorhanden, die sich in Stapelrichtung ebenfalls abwechselnd. Vorzugsweise umfasst der Zellstapel ferner einen Elektrolyten, der beispielsweise fest oder flüssig ist.

Somit ist aus zumindest drei der Lagen, vorzugsweise vier der Lagen, die in Stapelrichtung übereinander gestapelt sind, jeweils eine Batteriezelle gebildet, die insbesondere auch als Elektrodenlage bezeichnet wird. Jede der Batteriezellen weist zwei der Elektroden sowie einen oder zwei der Separatoren auf. Die beiden Elektroden jeder Batteriezelle unterscheiden sich hierbei, sodass jede Batteriezelle eine Anode und eine Kathode aufweist, zwischen denen der jeweilige Separator angeordnet ist. Somit sind die einzelnen Batteriezellen in Stapelrichtung zur Ausbildung des Zellstapels übereinander gestapelt, wobei zwischen den einzelnen Batteriezellen, sofern diese jeweils lediglich drei Lagen umfassen, jeweils noch eine zusätzliche der Lagen, nämlich der jeweilige Separator, angeordnet ist. Vorzugsweise umfasst der Zellstapel zwischen 10 Lagen und 1000 Lagen, zwischen 20 Lagen und 50 Lagen, zwischen 50 Lagen und 100 Lagen, zwischen 100 Lagen und 500 Lagen oder zwischen 120 Lagen und 200 Lagen. Somit umfasst der Zellstapel insbesondere bis zu 50 Batteriezellen.

Die Batterie umfasst ferner einen Kühlkörper, der parallel zur Stapelrichtung angeordnet ist. Beispielsweise ist ein Bestandteil des Kühlkörpers oder dieser vollständig parallel zur Stapelrichtung angeordnet, sodass dessen Achse der längsten Erstreckung parallel zur Stapelrichtung ist. Insbesondere ist der Kühlkörper zumindest teilweise quaderförmig, weswegen eine Ausrichtung erleichtert ist. Zudem ist der Kühlkörper neben dem Zellstapels angeordnet, also bezüglich der Stapelrichtung senkrecht zu diesem versetzt. Insbesondere überdeckt der Kühlkörper den Zellstapels bei einer Projektion auf diesen senkrecht zur Stapelrichtung oder umgekehrt.

Eine der Elektroden, die zwischen den Enden des Zellstapels angeordnet ist, steht senkrecht zur Stapelrichtung einseitig über die verbleibenden Elektroden über, wobei sich der Überstand zweckmäßigerweise auf der dem Kühlkörper zugewandten Seite befindet. Beispielsweise ist die überstehende Elektrode vollständig vergrößert, sodass diese insbesondere einen vergrößerten Umfang aufweist. Besonders bevorzugt sind sämtliche Elektroden im Wesentlichen rechteckförmig, wobei eine der Kanten der überstehenden Elektrode versetzt ist, sodass zwei der sich gegenüberliegenden Kanten dieser Elektrode im Vergleich zu den verbleibenden Elektroden verlängert sind. Alternativ hierzu ist diese Elektrode bezüglich der verbleibenden Elektroden versetzt, sodass diese nicht bündig oder sich überdeckend in Stapelrichtung angeordnet ist. Beispielsweise sind die verbleibenden Elektroden zueinander überdeckend in Stapelrichtung angeordnet.

Die überstehende Elektrode ist thermisch mit dem Kühlkörper kontaktiert. Insbesondere ist hierbei der Überstand der überstehenden Elektrode über die verbleibenden Elektroden thermisch mit dem Kühlkörper kontaktiert, vorzugsweise die dem Rest des Zellstapels gegenüberliegende Kante des Überstands. Beispielsweise ist zwischen der überstehenden Elektrode und dem Kühlkörper ein weiteres Bauteil angeordnet, wie eine Wärmeleitpaste. Besonders bevorzugt jedoch liegt die überstehende Elektrode mechanisch direkt an dem Kühlkörper an, vorzugsweise der Überstand. Infolgedessen ist eine Herstellung der thermischen Kontaktierung erleichtert. Besonders bevorzugt erfolgt zusätzlich eine elektrische Kontaktierung der überstehenden Elektrode mit dem Kühlkörper, weswegen eine Herstellung vereinfacht ist. Auch ist auf diese Weise eine vergleichsweise effiziente thermische Kontaktierung realisiert. Die verbleibenden Elektroden hingegen sind von dem Kühlkörper beabstandet und somit nicht mit diesem thermisch kontaktiert.

Aufgrund der thermischen Kontaktierung der überstehenden Elektrode, die zwischen den Enden liegt, erfolgt eine Ableitung von Wärme aus dem Inneren des Zellstapels auf den Kühlkörper, sodass nicht lediglich die Enden des Zellstapels gekühlt werden, beispielsweise über Konvektion oder aufgrund eines dort angeordneten weiteren Kühlkörper. Somit ist es möglich, eine Länge des Zellstapels in Stapelrichtung zu vergrößern, sodass die Batterie eine vergrößerte Anzahl an Batteriezellen aufweist. Somit ist eine Energiedichte der Batterie vergrößert und daher auch ein Gewicht reduziert. Da bei Betrieb aus dem Inneren des Zellstapels Wärme abgeführt werden kann, ist dennoch ein sicherer Betrieb gegeben.

Geeigneterweise sind die verbleibenden Elektroden von dem Kühlkörper beabstandet und folglich nicht thermisch mit diesem kontaktiert. Infolgedessen ist es möglich, den Kühlkörper aus einem elektrisch leitfähigen Material zu fertigen, was eine Wärmeabfuhr erleichtert. Dabei ist auch eine mechanische und daher auch elektrische Kontaktierung der überstehenden Elektrode mit dem Kühlkörper möglich, ohne dass ein elektrischer Kurzschluss mit den verbleibenden Elektroden erfolgt. Vorzugsweise ist zumindest eines der Enden, beispielsweise beide Enden, des Zellstapels jeweils mittels eines weiteren Kühlkörpers thermisch kontaktiert, sodass eine Wärmeabfuhr verbessert ist.

Geeigneterweise weisen mehrere der Elektroden einer Überstand auf, sodass mehrere überstehende Elektroden vorhanden sind, die bezüglich der verbleibenden Elektroden senkrecht zur Stapelrichtung einseitig überstehenden und thermisch mit dem Kühlkörper kontaktiert sind. Auf diese Weise ist eine Wärmeabfuhr aus dem Zellstapels verbessert. Geeigneterweise sind hierbei die überstehenden Elektroden zueinander baugleich, sodass Gleichteile verwendet werden können, was Herstellungskosten reduziert. Beispielsweise ist die überstehende Elektrode oder sämtliche überstehenden Elektroden als Anode ausgeführt, sodass bei Betrieb der Batterie prinzipbedingt keine Materialanlagerung an dem Überstand stattfinden kann.

Besonders bevorzugt steht jede zweite der Elektroden in Stapelrichtung bezüglich der verbleibenden Elektroden senkrecht zur Stapelrichtung einseitig über und ist thermisch mit dem Körper kontaktiert. Vorzugsweise sind dabei die überstehenden Elektroden elektrisch mit dem Kühlkörper kontaktiert, sodass eine Wärmeabfuhr verbessert ist. Daher weisen alle zweiten der Elektroden das gleiche elektrische Potential auf, sodass sämtliche Batteriezellen der Batterie zueinander elektrisch parallel geschaltet sind. Folglich wird über die Hälfte der insgesamt vorhandenen Elektroden die Wärme auf den Kühlkörper abgeführt, sodass der Zellstapel im Wesentlichen keinen Temperaturgradienten aufweist und die Batterie somit auch in einem Betriebszustand betrieben werden kann, in dem vermehrte Verluste auftreten, beispielsweise bei einem beschleunigten Laden oder Entladen.

Beispielsweise sind die Separatoren deckungsgleich zu den verbleibenden Elektroden. Somit ist ein vergleichsweise geringer Materialbedarf vorhanden. Besonders bevorzugt jedoch stehen die zu der überstehenden Elektrode direkt benachbarten Separatoren, also die die überstehende Elektroden in Stapelrichtung umgebenden Separatoren, bezüglich der verbleibenden Elektroden einseitig über, insbesondere auf der gleichen Seite, auf die auch die überstehende Elektrode übersteht. Infolgedessen wird mittels dieser Separatoren ein elektrischer Kurzschluss der überstehenden Elektrode mit der benachbarten verbleibenden Elektroden vermieden. Zudem wird mittels der Separatoren eine Materialanlagerung an der überstehenden Elektrode im Bereich des Überstands bei Betrieb verhindert. Beispielsweise reichen die Separatoren bis zu dem Kühlkörper. Besonders bevorzugt jedoch ist der Überstand der Separatoren im Vergleich zu dem Überstand der überstehenden Elektrode verringert. Somit ist ein Materialbedarf vermindert. Sofern jede zweite der Elektroden den Überstand aufweist, umfassen vorzugsweise sämtliche Separatoren ebenfalls den Überstand auf.

Die Elektroden umfassen vorzugsweise einen metallischen Ableiter, der auch als Träger bezeichnet ist. Dieser ist aus einem Metall gefertigt und mit einem Aktivmaterial versehen, wobei das Aktivmaterial sich zweckmäßigerweise beidseitig des Ableiters in Stapelrichtung befindet. Das Aktivmaterial dient zur Aufnahme von Arbeitsionen, wie Lithium-Ionen, und ist hierfür geeignet sowie vorgesehen und eingerichtet. Als Aktivmaterial wird beispielsweise ein Lithium-Metall-Oxid, wie Lithium-Cobalt(III)-Oxid (LiCoO2), NMC, NCA, LFP, GIC, LTO verwendet. Alternativ wird als Aktivmaterial NMC622 oder NMC811 herangezogen. Beispielsweise unterschieden sich die Aktivmaterialien der Anode und der Kathode, wobei geeigneterweise für jede der Anoden und jede der Kathoden das gleiche Aktivmaterial oder jeweils ein unterschiedliches Aktivmaterialien verwendet wird. Insbesondere ist das Aktivmaterial ein Bestandteil einer jeweiligen Schicht, die auf den jeweiligen Ableiter aufgetragen ist. Die Schicht umfasst dabei zweckmäßigerweise ein Leitadditiv, wie Leitruß, und beispielsweise einen Binder. Als Metall des Ableiters der Kathode wird beispielsweise Aluminium und als Metall des Ableiter der Anode Kupfer verwendet. Insbesondere sind die Ableiter folienförmig ausgestaltet und weisen zweckmäßigerweise eine Dicke unter 0,1 mm auf.

Zumindest jedoch weist die überstehende Elektroden den Ableiter auf, der mit dem Aktivmaterial versehen ist, vorzugsweise beidseitig in Stapelrichtung. Der Überstand ist hierbei zumindest teilweise frei von dem Aktivmaterial, zweckmäßigerweise auch frei von den verbleibenden Bestandteilen der etwaigen weiteren Schicht. Beispielsweise ist dabei der vollständige Überstand frei von dem Aktivmaterial und folglich im Wesentlichen lediglich bevorzugt mittels des Ableiters gebildet. Zumindest jedoch ist bevorzugt die überstehende Elektrode im Bereich der thermischen Kontaktierung mit dem Kühlkörper, frei von dem Aktivmaterial und somit vorzugsweise das dem Rest des Zellstapels abgewandte Ende der überstehenden Elektrode. Insbesondere erfolgt hierbei eine elektrische Kontaktierung des Ableiters mit dem Kühlkörper. Vorzugsweise weist der Ableiter im Vergleich zum Aktivmaterial oder sonstigen Bestandteilen der etwaigen Schicht, die das Aktivmaterial umfasst, eine erhöhten Wärmeleitfähigkeit auf, sodass eine Wärmeabfuhr aus dem Zellstapels verbessert ist. Da die Elektrode im Bereich des Überstands, insbesondere im Bereich der thermischen Kontaktierung mit dem Kühlkörper, frei von dem Aktivmaterial ist, ist ein thermischer Widerstand zwischen der Elektrode und dem Kühlkörper vergleichsweise gering, sodass eine Wärmeableitung verbessert ist. Zudem ist somit ein Bedarf an Aktivmaterial verringert, weswegen Herstellungskosten vermindert sind. Hierbei trägt aufgrund der Beabstandung zu dem Rest des Zellstapels ein etwaiges im Bereich des Übergangs vorhandene Aktivmaterial nicht oder lediglich in vergleichsweise geringem Maße zur Bereitstellung einer Kapazität bei.

Die überstehende Elektrode ist direkt mit dem Kühlkörper kontaktiert. Somit sind vergleichsweise wenige Bauteile erforderlich, weswegen Herstellungskosten reduziert sind.

Der Kühlkörper ist auf der dem Zellstapels zugewandten Seite gewellt oder gezackt ausgestaltet und weist somit einen variierenden Abstand zu dem Zellstapels auf. Insbesondere ist im Bereich der überstehende Elektrode der Abstand des Zellstapels zu dem Kühlkörper verringert und folglich der Kühlkörper gezackt bzw. gewellt ausgeführt. Somit ist sichergestellt, dass die überstehende Elektrode stets mit dem Kühlkörper aufgrund des verringerten Abstands thermisch kontaktiert ist und vorzugsweise an diesem mechanisch anliegt. Aufgrund des benachbarten vergrößerten Abstands, der mittels der Zacken bzw. Wellen geschaffen ist, ist auch bei einer übermäßig vergrößerten überstehenden Elektrode, beispielsweise bei vergleichsweise großen Fertigungstoleranzen, ein Ausgleichsbereich vorhanden, in den die überstehende teilweise ausweichen kann. Somit ist ein unkontrolliertes Abknicken der überstehenden Elektrode vermieden, sodass kein elektrischer Kurzschluss stattfindet. Somit ist eine Betriebssicherheit erhöht. Zusammenfassend ist somit der Kühlkörper im Bereich der mechanischen Anlage oder zumindest im Bereich der thermischen Kontaktierung gewellt oder gezackt ausgestaltet. Beispielsweise ist aufgrund der gezackten Ausführung der Querschnitt des Kühlkörpers entlang der Stapelrichtung sägezahnförmig oder weist mehrere aneinander gereihte auf.

Besonders bevorzugt umfasst das Batterie ein Gehäuse, das beispielsweise aus einem Metall gefertigt ist. Insbesondere ist das Gehäuse aus einem Aluminium oder einem Edelstahl erstellt, beispielsweise mittels Tiefzeihens. Zum Beispiel ist das Gehäuse ein Pouch-Gehäuse. In dem Gehäuse ist der Zellstapels angeordnet und somit mittels dessen zumindest teilweise geschützt. Der Kühlkörper ist mittels einer Wand des Gehäuses gebildet, insbesondere mittels eines Bodens. Somit sind vergleichsweise wenige Bauteile erforderlich, weswegen ein Gewicht und Herstellungskosten reduziert sind. Auch ist auf diese Weise eine Abgabe der an den Kühlkörper abgegebenen Wärme in die Umgebung erleichtert.

Vorzugsweise umfasst die Batterie einen oder mehrere elektrische Anschlüsse, geeigneterweise zumindest zwei, die elektrisch mit dem Zellstapels verbunden sind. Beispielsweise ist hierbei einer der elektrischen Anschlüsse über eine innerhalb des Gehäuses angeordnete Stromschiene mit allen oder zumindest einem Teil der verbleibenden Elektroden elektrisch kontaktiert. Der andere Anschluss ist beispielsweise direkt mit dem Gehäuse und hierüber mit den überstehenden Elektroden elektrisch kontaktiert. Alternativ hierzu ist der Anschluss innerhalb des Gehäuses zusätzlich mit den überstehenden Elektroden elektrisch kontaktiert, beispielsweise über eine weitere Stromschiene, oder über das etwaige vorhandene Kontaktierungselement. Zum Beispiel ist dabei dieser Anschluss auch mit weiteren der verbleibenden Elektroden elektrisch kontaktiert. Vorzugsweise befindet sich hierbei der oder die Anschlüsse auf der dem Wand gegenüberliegenden Seite des Gehäuses, die den Kühlkörper bildet. Infolgedessen ist ein Volumen des Kühlkörpers vergrößert und somit eine Wärmeabfuhr verbessert.

Besonders bevorzugt umfasst die Batterie zusätzlich eine Kühlplatte, die an der Wand an liegt, beispielsweise direkt oder über weitere Bauteile. Die Kühlplatte ist vorzugsweise thermisch mit der Wand kontaktiert. Somit wird bei Betrieb die Wand über die Kühlplatte entwärmt, sodass auch ein Betrieb der Batterie bei einem vergleichsweise großen Verlusten über einen längeren Zeitraum ermöglicht ist. Insbesondere ist hierbei die Wand zwischen der Kühlplatte und dem Zellstapels angeordnet. Mit anderen Worten ist die Kühlplatte außerhalb des Gehäuses positioniert. Infolgedessen ist ab Gabe der Wärme an die Umgebung verbessert. Zum Beispiel weist die Kühlplatte Kühlkanäle für ein Kühlfluid, beispielsweise eine Kühlflüssigkeit auf. Alternativ oder in Kombination hierzu umfasst der Kühlkörper mehrere Lamellen, sodass eine Oberfläche vergrößert ist.

Das Batteriemodul ist beispielsweise ein Bestandteil des Kraftfahrzeugs, wie eines Lastkraftwagens (Lkw) eines Busses oder eines Personenkraftwagens (Pkw). Das Batteriemodul umfasst mehrere Batterien, beispielsweise zwei, der, vier oder mehrere Batterien. Vorzugsweise ist die Anzahl der Batterien kleiner als 100 Batterien oder 50 Batterien. Die Batterien umfassen jeweils einen Zellstapels, der in einer Stapelrichtung übereinandergestapelte Lagen aufweist. Die Lagen sind dabei abwechselnd aus einer Elektrode oder einem Separator gebildet, und zumindest eine der zwischen den Enden des Zellstapels angeordneten Elektroden steht bezüglich der verbleibenden Elektroden der jeweiligen Batterie senkrecht zur Stapelrichtung über. Die überstehende Elektrode ist thermisch mit einem parallel zu der Stapelrichtung und neben dem Zellstapels angeordneten Kühlkörper der jeweiligen Batterie kontaktiert. Der Kühlkörper ist jeweils mittels einer Wand eines Gehäuses der jeweiligen Batterie gebildet, wobei an der Wand eine Kühlplatte anliegt. Die Wand ist dabei zwischen der Kühlplatte und dem Zellstapel angeordnet. Vorzugsweise ist die Stapelrichtung sämtlicher Batterien zueinander gleich, und die Kühlplatten befinden sich auf der gleichen Seite bezüglich der Zellstapels. Insbesondere sind die Kühlplatten quaderförmig ausgestaltet. Bevorzugt sind die Kühlplatten einstückig miteinander, was eine Fertigung vereinfacht. Zum Beispiel ist die Kühlplatte mittels eines Teils eines Batteriemodulgehäuses des Batteriemoduls gebildet, wie einem Boden des Batteriemodulgehäuses. Zum Beispiel liegen die Gehäuse der einzelnen Batterien direkt mechanisch aneinander an, sodass ein Platzbedarf verringert ist. Auch weisen somit sämtliche Batterien im Wesentlichen die gleiche Temperatur auf.

Die Erfindung betrifft ferner ein Kraftfahrzeug, das vorzugsweise landgebunden ist. Beispielsweise ist das Kraftfahrzeug ein Nutzkraftwagen, wie ein Lastkraftwagen (Lkw) oder Bus. Bevorzugt ist das Kraftfahrzeug ein Personenkraftwagen (Pkw). Das Kraftfahrzeug weist einen Antrieb mit einem Elektromotor auf. Beispielsweise ist der Antrieb ein Bestandteil eines Nebenaggregats oder besonders bevorzugt ein Hauptantrieb, mittels dessen eine Fortbewegung des Kraftfahrzeugs erfolgt. Ferner umfasst das Kraftfahrzeug eine Batterie, mittels derer der Elektromotor bestromt ist. Die Batterie umfasst einen Zellstapel, der in einer Stapelrichtung übereinandergestapelten Lagen aufweist, wobei die Lagen abwechselnd aus einer Elektrode oder einem Separator gebildet sind. Zumindest eine der zwischen den Enden des Zellstapels angeordneten Elektroden steht bezüglich der verbleibenden Elektroden senkrecht zur Stapelrichtung einseitig über und ist thermisch mit einem parallel zu der Stapelrichtung und neben dem Zellstapel angeordnetem Kühlkörper kontaktiert. Besonders bevorzugt umfasst das Kraftfahrzeug mehrere derartige Batterien, die Bestandteil eines Batteriemoduls sind, mittels dessen somit eine Bestromung des Elektromotors erfolgt. Geeigneterweise umfassen dabei die Batterien jeweils die Kühlplatten, die miteinander einstückig sind.

Die im Zusammenhang mit der Batterie beschriebenen Vorteile und Weiterbildungen sind sinngemäß auch auf das Batteriemodul /das Kraftfahrzeug und untereinander zu übertragen und umgekehrt.

Nachfolgend werden Ausführungsbeispiele der Erfindung anhand einer Zeichnung näher erläutert. Darin zeigen:
- Fig. 1: schematisch vereinfacht ein Kraftfahrzeug, das eine Hochvoltbatterie mit mehreren baugleichen Batteriemodulen aufweist,
- Fig. 2: in einer Schnittdarstellung schematisch ausschnittsweise eines der Batteriemodule, das mehrere baugleiche Batterien mit jeweils einem Zellstapel aufweist,
- Fig. 3 - 8: jeweils ausschnittsweise unterschiedliche Ausführungsformen der Batterie, und
- Fig. 9: in einer Schnittdarstellung ausschnittsweise eine weitere Ausführungsform der Batterie (nicht Bestandteil der Erfindung)

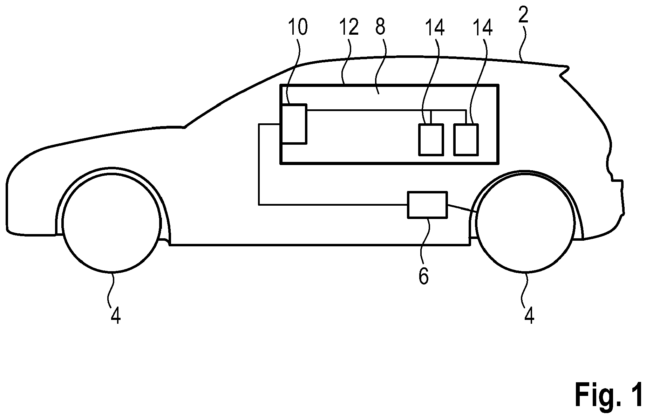

Einander entsprechende Teile sind in allen Figuren mit den gleichen Bezugszeichen versehen. In Figur 1 ist schematisch vereinfacht ein Kraftfahrzeug 2 in Form eines Personenkraftwagens (Pkw) dargestellt. Das Kraftfahrzeug 2 weist eine Anzahl an Rädern 4 auf, von denen zumindest einige mittels eines Antriebs 6 angetrieben sind, der einen Elektromotor umfasst. Somit ist das Kraftfahrzeug 2 ein Elektrofahrzeug oder ein Hybrid-Fahrzeug. Der Antrieb 6 weist einen Umrichter auf, mittels dessen der Elektromotor gespeist ist. Der Umrichter des Antriebs 6 wiederum ist mittels eines Energiespeichers 8 in Form einer Hochvoltbatterie bestromt. Hierfür ist der Antrieb 6 mit einer Schnittstelle 10 des Energiespeichers 8 verbunden, die in ein Energiespeichergehäuse 12 des Energiespeichers 8 eingebracht ist, das aus einem Edelstahl erstellt ist. Innerhalb des Energiespeichergehäuses 12 des Energiespeichers 8 sind mehrere Batteriemodule 14 angeordnet, von denen ein Teil zueinander elektrisch in Reihe und diese wiederum elektrisch zueinander parallel geschaltet sind. Der elektrische Verband der Batteriemodule 14 ist mit der Schnittstelle 10 elektrisch kontaktiert, sodass bei Betrieb des Antriebs 6 ein Entladen oder Laden (Rekuperation) der Batteriemodule 14 erfolgt. Aufgrund der elektrischen Verschaltung ist dabei die an der Schnittstelle 10 bereitgestellte elektrische Spannung, die 400 V beträgt, ein Vielfaches der mit den zueinander baugleichen Batteriemodule 14 jeweils bereitgestellten elektrischen Spannung.

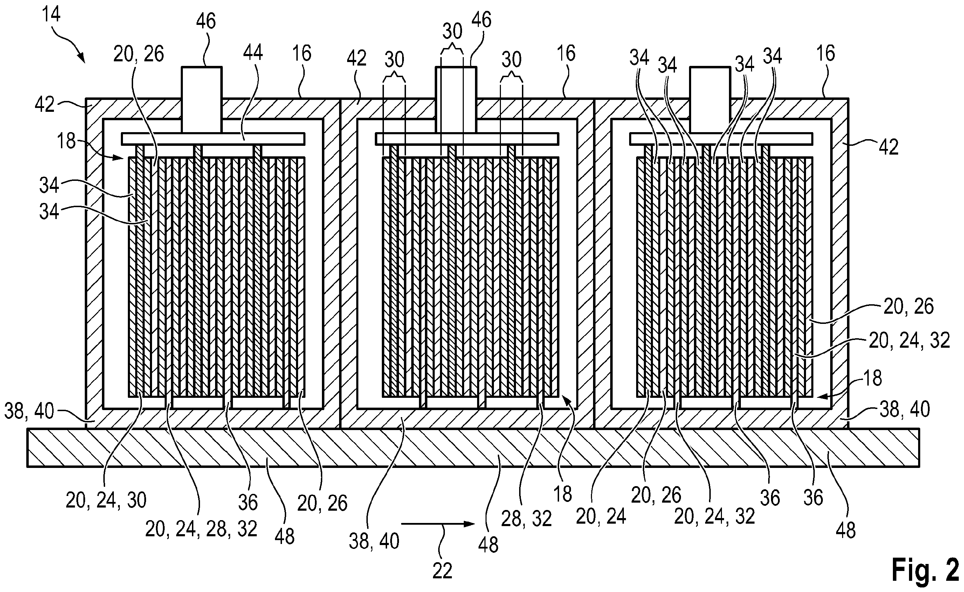

In Figur 2 ist schematisch vereinfacht in einer Schnittdarstellung ausschnittsweise eines der Batteriemodule 14 dargestellt. Das Batteriemodul 14 umfasst mehrere zueinander baugleiche Batterien 16, von denen hier drei gezeigt sind. Ein Teil der Batterien 16 ist in nicht näher dargestellter Weise elektrisch miteinander parallel und anderenfalls elektrisch in Reihe geschaltet, sodass die mittels jedes Batteriemoduls 14 bereitgestellte elektrische Spannung einem Vielfachen der mittels einer der Batterien 16 bereitgestellten elektrischen Spannung entspricht. Jede Batterie 16 weist einen Zellstapel 18 auf, der mehrere Lagen 20 umfasst, die in einer Stapelrichtung 22 übereinander gestapelt sind. Die Stapelrichtung 22 ist bei sämtlichen Batterien 16 gleich und parallel zu dem Schnitt der Schnittdarstellung. Auch sind die Batterien 16 in Stapelrichtung 22 aneinander anliegend angeordnet.

Die Lagen 20 sind flächig und eben ausgestaltet sowie senkrecht zur Stapelrichtung 22 angeordnet. Jede der Lagen 20 ist hierbei im Wesentlichen rechteckförmig. Jeder Zellstapel 18 weist zwischen 140 und 200 derartige Lagen 20, von denen hier lediglich ein Teil gezeigt ist. Jede der Lagen 20 ist entweder aus einer Elektrode 24 oder einem Separator 26 gebildet, und die Separatoren 26 und die Elektroden 24 sind abwechselnd in Stapelrichtung 20 angeordnet. Die Elektroden 24 sind auf Anoden 28 und Kathoden 30 aufgeteilt, die ebenfalls abwechselnd in Stapelrichtung 22 angeordnet sind, sodass auf eine der Anoden 28 in Stapelrichtung 22 eine der Kathoden 30 als jeweilige Elektrode 24 und umgekehrt folgt. Die Elektroden 24 weisen jeweils einen Ableiter 32 auf, der aus einer Metallfolie erstellt ist. Im Fall der Anode 28 handelt es sich hierbei um eine Kupferfolie und im Fall der Kathode 30 um eine Aluminiumfolie. Die Ableiter(-folien) sind beidseitig in Stapelrichtung 22 mit einem ein Aktivmaterial, wie NMC, enthaltenen Schicht 34 versehen, die zudem einen Binder und ein Leitadditiv, wie Leitruß, umfasst. Der auf diese Weise gebildete Zellstapel 18 weist somit mehrere Batteriezellen auf, wobei jeder Batteriezelle ist eine der Anoden 28 und eine der Kathoden 30, die zueinander in Stapelrichtung 22 benachbart sind, zugeordnet. Ferner ist jeder Batteriezelle einer oder zwei der Separatoren 26 zugeordnet.

Sämtliche Anode 28 sind bezüglich der verbleibenden Elektroden 24, nämlich der Kathoden 30, senkrecht zur Stapelrichtung 22 einseitig verlängert, sodass diese bezüglich der verbleibenden Elektroden 24. Folglich stehen jede zweite der Elektroden 24 in Stapelrichtung 22 bezüglich der verbleibenden Elektroden 24, nämlich der Kathoden 30, senkrecht zur Stapelrichtung 22 einseitig über, sodass ein Überstand 36 gebildet ist. Mit anderen Worten bilden die Anoden 28 die überstehende Elektroden, und die Kathoden 30 bilden die verbleibenden Elektroden. Da sämtliche Anoden 28 die überstehenden Elektroden bilden, weist somit auch ein Teil der zwischen den Enden des Zellstapels 18 angeordneten Elektroden 24 bezüglich der verbleibenden Elektroden, nämlich der Kathoden 30, senkrecht zur Stapelrichtung 22 einseitig den Überstand 36 auf.

Der Überstand 36 ist jeweils frei von der Schicht 34 und lediglich mittels des jeweiligen Ableiters 32 gebildet. Daher ist der Überstand 36 jeweils frei von dem Aktivmaterial. Jeder Überstand 36 ist endseitig, also auf der dem Rest des Zellstapels 18 gegenüberliegenden Seite, elektrisch und daher auch thermisch mit einem Kühlkörper 38 kontaktiert. Der Kühlkörper 28 ist mittels einer eben und flächig ausgestalten Wand 40, nämlich einem Boden eines im Wesentlichen quaderförmigen Gehäuses 42 der jeweiligen Batterie 16 gebildet ist. Hierbei ist der jeweilige Zellstapels 18 innerhalb des jeweiligen Gehäuses 42 angeordnet, und die Wand 40 ist parallel zur Stapelrichtung 22 angeordnet. Infolgedessen ist die Wand 40 neben dem Zellstapel 18 angeordnet. Die Gehäuse 42 sind geschlossen ausgestaltet und jeweils aus einem Metall gefertigt. In einer Ausführungsvariante sind die Gehäuse 42 als Pouch-Gehäuse ausgestaltet und somit zumindest teilweise aus einer Metallfolie erstellt.

Innerhalb jedes Gehäuses 42 ist zudem eine Stromschiene 44 angeordnet, die elektrisch mit einem Anschluss 46 kontaktiert ist. Der Anschluss 46 ragt durch das Gehäuse 42 hindurch und ist elektrisch gegen dieses isoliert. Die Stromschiene 44 ist mit sämtlichen Kathoden 30 elektrisch kontaktiert, die hierfür ein entsprechendes Anschlussfähnchen aufweisen. Jede Batterie 16 umfasst ferner einen weiteren, nicht näher dargestellte Anschluss, der elektrisch direkt mit dem Gehäuse 42 kontaktiert ist, und sich, ebenso wie der Anschluss 46 auf der der Wand 40 gegenüberliegenden Seite des Gehäuses 42 befindet. Dieser Anschluss ist daher elektrisch mit den Anoden 28 kontaktiert. Eine Energieentnahme aus der Batterie 16 erfolgt über den Anschluss 46 sowie den weiteren, nicht näher dargestellten Anschluss.

Jede Batterie 16 umfasst ferner einen Kühlplatte 48, wobei sämtliche Kühlplatten 48 der Batterien 16 des gleichen Batteriemoduls 14 miteinander einstückig sind und mittels eines Bodens oder einer sonstigen Wand eines Batteriemodulgehäuses gebildet sind. Die Kühlplatten 48 liegen hierbei außenseitig an der jeweiligen Wand 40 an. Mit anderen Worten ist die Wand 40 jeder Batterie 16 zwischen den jeweiligen Zellstapeln 18 und der Kühlplatte 48 angeordnet, und jedes der Gehäuse 42 steht auf der die Kühlplatten 48 bildenden Wand des Batteriemodulgehäuses auf. Mit einer weiteren der Wände des Gehäuses 42, die das Gehäuse 42 in Stapelrichtung 22 begrenzen, liegt zumindest ein Teil der einzelnen Gehäuse 42 aneinander an, sodass eine Kompaktheit des Batteriemoduls 14 erhöht ist.

Bei Betrieb des Batteriemoduls 14 erfolgt ein Einspeisen oder eine Entnahme von elektrischer Energie zu den Batterien 16, sodass eine Erwärmung des jeweiligen Zellstapels 18 erfolgt. Über die überstehenden Elektroden, also die Anode 28 wird hierbei die Wärme aus dem Zellstapel 18 an den Kühlkörper 38, nämlich die Wand 40 des jeweiligen Gehäuse 42, abgegeben und von dieser an die Kühlplatte 48, also an das Gehäuse des Batteriemoduls 14, das mittels einer nicht näher gezeigten Kühlvorrichtung gekühlt wird. Infolgedessen erfolgt eine vergleichsweise effiziente Entwärmung der Zellstapel 18, und sämtliche Batterien 16 weisen im Wesentlichen die gleiche Temperatur auf.

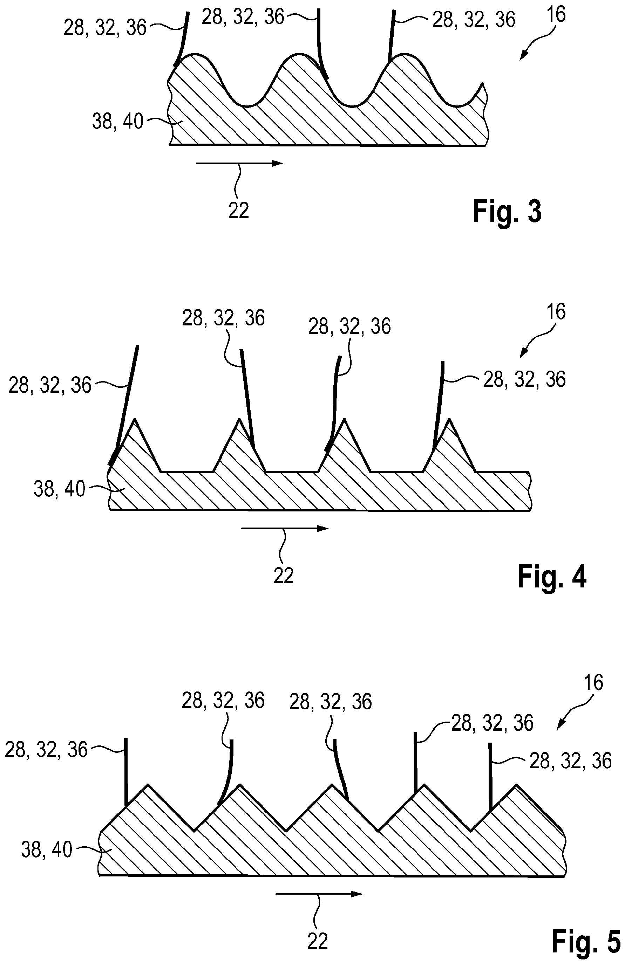

In Figur 3 ist schematisch vereinfacht in einer Schnittdarstellung entlang der Stapelrichtung 22 ausschnittsweise eine weitere Ausführungsform der Batterie 16 dargestellt. In diesem Fall ist die dem Zellstapels 18 zugewandten Seite, also die Oberfläche, der Wand 40 gewellt ausgestaltet, sodass der Abstand der Wand 40 zu dem Zellstapels 18 variiert. Infolgedessen ist es möglich, die Ableiter 32 der Anode 28 mit einer vergleichsweise großen Fertigungstoleranz zu fertigen, sodass eine Größe des Überstand 36 variiert. Die Wellenberge befinden sich hierbei an der Position, an der sich die Anoden 28 befinden. Aufgrund der gewellten Ausführungsform liegt auch bei der vergleichsweise großen Fertigungstoleranz jeder Ableiter 32 sicher mechanisch und daher thermisch und elektrisch an der Wand 40 an, wobei bei einem vergrößerten Überstand 36 das Freiende in eines der benachbarten Wellentäler geführt ist und vollflächig an der Wand 40 anliegt. Infolgedessen ist ein unkontrolliertes Verbiegen der die Ableiter 32 bildenden Folien vermieden. Zudem ist auf diese Weise auch ein vergleichsweise großer flächiger mechanischer Kontakt zwischen den Ableiter 32 und den Wellenflanken der Wand 40 erstellt, weswegen eine Wärmeabfuhr verbessert ist.

In Figur 4 ist eine weitere Alternative entsprechend Figur 3 dargestellt. Hierbei ist die dem Zellstapel 18 zugewandte Seite des Wand 40 gezackt ausgestaltet und mittels zueinander benachbarter Zacken gebildet. Mit anderen Worten ist der Querschnitt entlang der Stapelrichtung 22 dreiecksförmig, wobei die einzelnen Dreiecke zueinander beabstandet sind. Die Spitzen der Dreiecke befinden sich dabei an der gewünschten Position der Anode 28. Auch auf diese Weise ist ein entsprechender Toleranzausgleich möglich, wobei ein vergleichsweise großflächiger Kontakt der einzelnen Ableiter 32 mit der Wand 40 erfolgt.

In Figur 5 ist eine weitere Alternative der Batterie entsprechend Figur 3 und 4 dargestellt. Auch hier ist die Wand 40 gezackt ausgestaltet, wobei der Querschnitt entlang der Stapelrichtung 22 ebenfalls Dreiecke aufweist, die jedoch direkt aneinander angrenzen. Infolgedessen ist eine Positionieren der Spitzen der Dreiecke an der Position der Anoden 28 zur Realisierung des Kontakts nicht zwingend erforderlich.

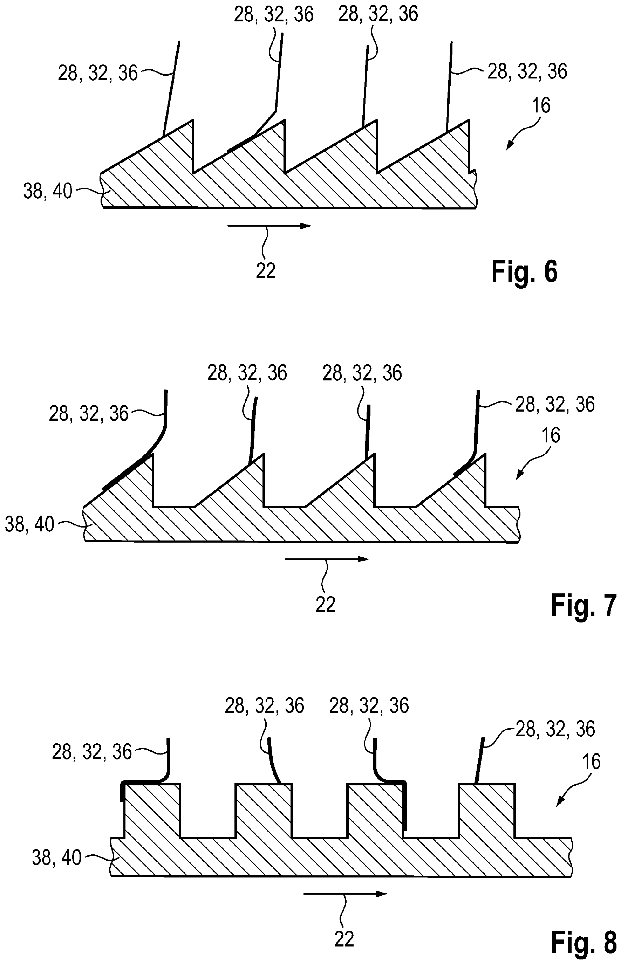

Bei der in Figur 6 dargestellten Variante ist der Querschnitt der den Kühlkörper 38 bildenden Wand 40 entlang der Stapelrichtung 22 auf deren dem Zellstapels zugewandten Seite sägezahnförmig. Aufgrund der gebildeten Rampen erfolgt eine sukzessive Annäherung der Wand 40 an den Zellstapels 18, sodass stets ein Kontakt mit den Ableitern 32 gegeben ist.

Bei der in Figur 7 dargestellten Variante sind in die einzelnen Sägezähne im Vergleich zur Figur 6 zueinander beabstandet, sodass die Flanken den Sägezähne steiler ausgestaltet sind. Somit ist eine Kontaktflächen weiter vergrößert

Bei der in Figur 8 dargestellten Variante weist die dem Zellstapel 18 zugewandte Seite der Wand 40 einzelne Stufen auf. Falls der Überstand 36 vergleichsweise groß ausgestaltet ist, ist dieser um die Stufe geführt. Somit ist ein vergleichsweise großflächiger Kontakt mit der Wand 40 gegeben, wobei jedoch im Bereich der einzelnen Kanten der Stufen ein ungewolltes Ablösen möglich ist.

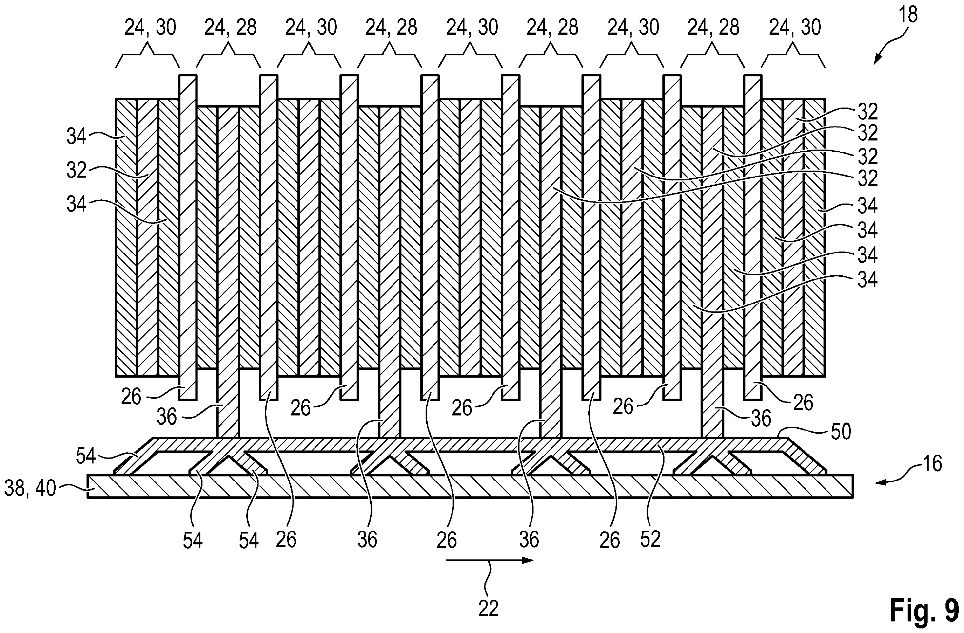

In Figur 9 ist in einer Schnittdarstellung entlang der Stapelrichtung 22 eine letzte Ausführungsform der Batterie 16 gezeigt, die nicht Bestandteil der Erfindung ist.

Der Zellstapel 18 weist wiederum die Elektroden 24, nämlich die Anoden 28 sowie die Kathoden 30, auf, die sich in Stapelrichtung 22 abwechseln. Die Elektroden 24 weisen wiederum jeweils den aus einer jeweiligen Folie gebildeten Ableiter 32 auf, der auf beiden Seiten bezüglich der Stapelrichtung 22 mit der Schicht 34 versehen ist. Auch bildet weiterhin der Ableiter 32 der Anode 28 auf der dem Kühlkörper 38, also der Wand 40, zugewandten Seite den Überstand 36. Zwischen den Anode 28 und den Kathoden 30 sind wiederum die Separatoren 26 angeordnet, die jedoch zumindest einseitig bezüglich der verbleibenden Elektroden, also der Kathoden 30, überstehen. Hierbei stehen die Separatoren 26 umlaufend oder zumindest auch auf der Wand 40 gegenüberliegenden Seite des Zellstapels 18 über. Zusammenfassend stehen die zu den überstehenden Elektroden, also den Anode 28, direkt benachbarten Separatoren 26 bezüglich der verbleibenden Elektroden, also der Kathoden 30, zumindest einseitig überstehen. Somit wird eine Materialanlagerung des Aktivmaterials der Kathoden 30 an den Anoden 28, nämlich an dem Überstand 36, mittels des Separatoren 26 vermieden.

Ferner sind die Überstände 36 nicht direkt mit der Wand 40 mechanisch, elektrisch und thermisch kontaktiert, sondern über ein Kontaktierungselement 50, das einstückig aus einem Federblech erstellt ist. Das Kontaktierungselement 50 weist einen flächigen Körper 52 auf, der parallel zu der Wand 40 angeordnet ist und sich zwischen dem Zellstapel 18 und der Wand 40 befindet. Der Körper 52 ist mittels mehrerer federnder Kontaktelemente 54 an der Wand 40 und somit an dem Kühlkörper 38 abgestützt. Die Kontaktelemente 54 sind einstückig mit dem Körper 52, und das Kontaktierungselement 50 ist als Stanzbiegeteil ausgestaltet. Die Überstände 36 liegen mechanisch und direkt an dem Körper 52 an und sind folglich elektrisch und thermisch mit dem Kontaktierungselement 50 kontaktiert. Mittels der Kontaktelemente 54 erfolgt eine mechanische Anlage des Kontaktierungselement 52 an dem Kühlkörper 38, sodass das Kontaktierungselement 52 thermisch und elektrisch mit dem Kühlkörper 38 kontaktiert ist. Folglich sind auch weiterhin die überstehenden Elektroden, nämlich die Anoden 28, elektrisch und thermisch mit dem Kühlkörper 38 kontaktiert.

In einer nicht näher dargestellten Variante weisen die in den Figuren 2-8 dargestellten Varianten die überstehenden Separatoren 26 auf. Bei weiteren nicht näher gestalten Varianten ist bei der in Figur 9 dargestellten Variante die Wand 40 entsprechend der in den Figuren 3-8 gezeigten Ausführungsform ausgestaltet. In weiteren, nicht näher dargestellten Variante, ist der Körper 52 entsprechend auf der dem Zellstapel 18 zugewandten Seite entsprechend der in den Figuren 3-8 gezeigten Seite der Wand 40 geformt.

Die Erfindung ist nicht auf die vorstehend beschriebenen Ausführungsbeispiele beschränkt.

### Bezugszeichenliste

- 2: Kraftfahrzeug
- 4: Rad
- 6: Antrieb
- 8: Energiespeicher
- 10: Schnittstelle
- 12: Energiespeichergehäuse
- 14: Batteriemodul
- 16: Batterie
- 18: Zellstapel
- 20: Lage
- 22: Stapelrichtung
- 24: Elektrode
- 26: Separator
- 28: Anode
- 30: Kathode
- 32: Ableiter
- 34: Schicht
- 36: Überstand
- 38: Kühlkörper
- 40: Wand
- 42: Gehäuse
- 44: Stromschiene
- 46: Anschluss
- 48: Kühlplatte
- 50: Kontaktierungselement
- 52: Körper
- 54: Kontaktelement

## Patentansprüche

1. Batterie (16) mit einem Zellstapel (18), der in einer Stapelrichtung (22) übereinandergestapelten Lagen (20) umfasst, wobei die Lagen (20) abwechselnd aus einer Elektrode (24) oder einem Separator (26) gebildet sind, wobei zumindest eine der zwischen den Enden des Zellstapels (18) angeordneten Elektroden (24, 28) bezüglich der verbleibenden Elektroden (24, 30) senkrecht zur Stapelrichtung (22) einseitig übersteht und thermisch mit einem parallel zu der Stapelrichtung (22) und neben dem Zellstapel (18) angeordnetem Kühlkörper (38) kontaktiert ist, **dadurch gekennzeichnet, dass** die überstehende Elektrode (24, 30) direkt mit dem Kühlkörper kontaktiert ist, wobei der Kühlkörper (38) auf der dem Zellstapel (18) zugewandten Seite gewellt oder gezackt ausgestaltet ist, und wobei der Kühlkörper (38) mittels einer Wand (40) eines Gehäuses (42) gebildet ist, in dem der Zellstapel (18) angeordnet ist.

2. Batterie (16) nach Anspruch 1, **dadurch gekennzeichnet, dass** jede zweite der Elektroden (24, 28) in Stapelrichtung (22) bezüglich der verbleibenden Elektroden (24, 30) senkrecht zur Stapelrichtung (22) einseitig übersteht und thermisch mit dem Kühlkörper (38) kontaktiert ist.

3. Batterie (16) nach Anspruch 1 oder 2, **dadurch gekennzeichnet, dass** die zu der überstehenden Elektrode (28) direkt benachbarten Separatoren (26) bezüglich der verbleibenden Elektroden (30) einseitig überstehen.

4. Batterie (16) nach einem der Ansprüche 1 bis 3, **dadurch gekennzeichnet, dass** die überstehende Elektrode (24, 28) einen metallischen Ableiter (32) umfasst, der mit einem Aktivmaterial versehen ist, wobei der Überstand (36) zumindest teilweise frei von dem Aktivmaterial ist.

5. Batterie (16) nach einem der Ansprüche 1 bis 4, **gekennzeichnet durch** eine an der Wand (40) anliegende Kühlplatte (48), wobei die Wand (40) zwischen der Kühlplatte (48) und dem Zellstapel (18) angeordnet ist.

6. Batteriemodul (14) mit mehreren Batterien (16) nach Anspruch 5, wobei die Kühlplatten (48) einstückig miteinander sind.

## Claims

1. Battery (16) having a cell stack (18) which comprises layers (20) stacked one on top of another in a stack direction (22), wherein the layers (20) are alternately formed from an electrode (24) or a separator (26), wherein at least one of the electrodes (24, 28) arranged between the ends of the cell stack (18) protrudes perpendicularly to the stack direction (22) on one side with respect to the rest of the electrodes (24, 30) and makes thermal contact with a heat sink (38) arranged parallel to the stack direction (22) and alongside the cell stack (18), **characterized in that** the protruding electrode (24, 30) makes contact with the heat sink directly, wherein the heat sink (38) has a wavy or jagged configuration on that side facing the cell stack (18), and wherein the heat sink (38) is formed by means of a wall (40) of a housing (42) in which the cell stack (18) is arranged.

2. Battery (16) according to Claim 1, **characterized in that** every second electrode (24, 28) in the stack direction (22) protrudes perpendicularly to the stack direction (22) on one side with respect to the rest of the electrodes (24, 30) and makes thermal contact with the heat sink (38).

3. Battery (16) according to Claim 1 or 2, **characterized in that** the separators (26) directly adjacent to the protruding electrode (28) protrude on one side with respect to the rest of the electrodes (30).

4. Battery (16) according to one of Claims 1 to 3, **characterized in that** the protruding electrode (24, 28) comprises a metal arrester (32) which is provided with an active material, wherein the protrusion (36) is at least in part free of the active material.

5. Battery (16) according to one of Claims 1 to 4, **characterized by** a cooling plate (48) lying against the wall (40), wherein the wall (40) is arranged between the cooling plate (48) and the cell stack (18).

6. Battery module (14) having a plurality of batteries (16) according to Claim 5, wherein the cooling plates (48) are integral with one another.

## Revendications

1. Batterie (16) comprenant un empilement de cellules (18) qui comprend des couches (20) empilées les unes sur les autres dans une direction d'empilement (22), les couches (20) étant formées alternativement d'une électrode (24) ou d'un séparateur (26), au moins une des électrodes (24, 28) disposées entre les extrémités de l'empilement de cellules (18) faisant saillie, sur un côté, des électrodes restantes (24, 30) perpendiculairement à la direction d'empilement (22) et venant en contact thermique avec un dissipateur thermique (38) disposé parallèlement à la direction d'empilement (22) et à côté de l'empilement de cellules (18), **caractérisée en ce que** l'électrode saillante (24, 30) vient directement en contact avec le dissipateur thermique, le dissipateur thermique (38) étant conçu pour être ondulé ou dentelé du côté dirigé vers l'empilement de cellules (18), et le dissipateur thermique (38) étant formé par une paroi (40) d'un boîtier (42) dans lequel l'empilement de cellules (18) est disposé.

2. Batterie (16) selon la revendication 1, **caractérisée en ce que**, sur un côté dans la direction d'empilement (22), une électrode (24, 28) sur deux fait saillie des électrodes restantes (24, 30) perpendiculairement à la direction d'empilement (22) et vient en contact thermique avec le dissipateur thermique (38).

3. Batterie (16) selon la revendication 1 ou 2, **caractérisée en ce que** les séparateurs (26) directement adjacents à l'électrode saillante (28) dépassent, sur un côté, des électrodes restantes (30).

4. Batterie (16) selon l'une des revendications 1 à 3, **caractérisée en ce que** l'électrode saillante (24, 28) comprend un conducteur métallique (32) qui est pourvu d'une matière active, la partie saillante (36) étant au moins partiellement dépourvue de matière active.

5. Batterie (16) selon l'une des revendications 1 à 4, **caractérisée par** une plaque de refroidissement (48) en appui sur la paroi (40), la paroi (40) étant disposée entre la plaque de refroidissement (48) et l'empilement de cellules (18).

6. Module de batteries (14) comprenant plusieurs batteries (16) selon la revendication 5, les plaques de refroidissement (48) étant solidaires les unes des autres.
